# EUROPEAN PATENT APPLICATION

(11) **EP 3 461 999 A1**
(43) Date of publication of application: **03.04.2019**
(21) Application number: 18196957.7
(22) Date of filing: 26.09.2018
(51) Int. Cl.: F01D 21/00, F01D 25/24, F23M 11/04, F23R 3/00, F01D 25/14

(54) **CONTOURED CASE BOSSES FOR A GAS TURBINE ENGINE**

(30) Priority: 29.09.2017 US 201715720523
(71) Applicant: United Technologies Corporation, Farmington, CT 06032 (US)
(72) Inventor: QUACH, San, Southington, CT Connecticut 06489 (US); STRAUSBAUGH, Jeffrey C, New Britain, CT Connecticut 06053 (US); BETANCOURT, Fabian D, Meriden, CT Connecticut 06450 (US); SEDOR, Joseph J, Oxford, MA Massachusetts 01540 (US); SCOTT, Jonathan A, Southington, CT Connecticut 06489 (US); JONES, Major D, Royal Palm Beach, FL Florida 33411 (US)
(74) Representative: Dehns

(57) **Abstract**

Aspects of the disclosure are directed to a case (66) for a gas turbine engine (20), the case (66) including a case wall (122) and a boss (130; 150-152; 170-172; 200-202) that extends from the case wall (122), the boss (130; 150-152; 170-172; 200-202) including a distal top contoured surface (136; 162; 188; 204-206) with a through hole (132-134; 154-160; 174-180; 208-212) formed there in, the distal top contoured surface (136; 162; 188; 204-206) having a non-uniform radial wall thickness.

## Description

### BACKGROUND OF THE INVENTION

### 1. Technical Field

The present disclosure relates to a gas turbine engine and, more particularly, to a case for a gas turbine engine having a case with contoured bosses.

### 2. Background Information

Gas turbine engines, such as those that power modern commercial and military aircraft, generally include a compressor section to pressurize an airflow, a combustor section to burn a hydrocarbon fuel in the presence of the pressurized air, and a turbine section to extract energy from the resultant combustion gases.

For fully machined engine cases, with bosses too close to each other there is a risk of cracks due to high stress concentrations. In addition, there may be high thermal gradients through the walls of the case. The high stress concentration and high thermal gradients may lead to a reduction in case service life.

### SUMMARY OF THE DISCLOSURE

The following presents a simplified summary in order to provide a basic understanding of some aspects of the disclosure. The summary is not an extensive overview of the disclosure. It is neither intended to identify key or critical elements of the disclosure nor to delineate the scope of the disclosure. The following summary merely presents some concepts of the disclosure in a simplified form as a prelude to the description below.

Aspects of the disclosure are directed to a case for a gas turbine engine. The case includes a case wall. The case for a gas turbine engine may also include a boss that extends from the case wall, the boss comprising a distal top contoured surface with a through hole formed there in, the distal top contoured surface having a non-uniform radial wall thickness.

The boss may include a plurality of through holes wherein each of the plurality of through holes has an associated distal top surface having an associated non-uniform radial wall thickness.

The case wall may define a first thickness and the boss defines a second thickness at the distal top surface, and the second thickness is greater than the first thickness.

The case may be a diffuser case.

The boss may be triangular shaped.

The boss may be rhomboid shaped.

According to another aspect of the present disclosure a case for a gas turbine engine may include a case wall that defines a first thickness. The case may also include a boss that extends from the case wall, the boss comprising a distal top surface with a through hole formed there in, the distal top surface having a radial wall surface whose radial thickness is non-uniform.

According to another aspect of the present disclosure, a method of reducing stress in a case of a gas turbine engine is provided. The method may include machining a radial wall of a boss so the boss has a non-uniform radial thickness.

The method may further include 3-axis milling the boss.

The method may further include multi-axis milling the boss.

The method may further include marching or machining the boss to a desired case wall thickness.

### BRIEF DESCRIPTION OF THE DRAWINGS

Various features will become apparent to those skilled in the art from the following detailed description of the disclosed non-limiting embodiments. The drawings that accompany the detailed description can be briefly described as follows:
FIG. 1 is a schematic cross-section of an example gas turbine engine;
FIG. 2 is an exploded view of the engine of FIG. 1 separated into modules;
FIG. 3 is a perspective view of a diffuser case of the diffuser module;
FIGs. 4A is a top view of a boss according to one disclosed non-limiting embodiment;
FIG. 4B is a cross-sectional view taken along the line A-A in FIG. 4A;
FIG. 4C is a cross-sectional view taken along the line X-X in FIG. 4A;
FIGs. 5A and 5B illustrate an expanded view of another example of a boss according to one disclosed non-limiting embodiment and a cross-sectional view thereof taken along the line B-B, respectively;
FIGs. 6A and 6B illustrate an expanded view of yet another example of a boss according to one disclosed non-limiting embodiment and a cross-sectional view thereof taken along the line C-C, respectively;
FIG. 7 is a cross-sectional view of still yet another boss according to another disclosed non-limiting embodiment;
FIG. 7A is a cross-sectional view taken along the line Y-Y in FIG.7; and
FIG. 7B is a cross-sectional view taken along the line Z-Z in FIG. 7.

### DETAILED DESCRIPTION

It is noted that various connections are set forth between elements in the following description and in the drawings (the contents of which are incorporated in this specification by way of reference). It is noted that these connections are general and, unless specified otherwise, may be direct or indirect and that this specification is not intended to be limiting in this respect. A coupling between two or more entities may refer to a direct connection or an indirect connection. An indirect connection may incorporate one or more intervening entities or a space/gap between the entities that are being coupled to one another.

Aspects of the disclosure may be applied in connection with a gas turbine engine.

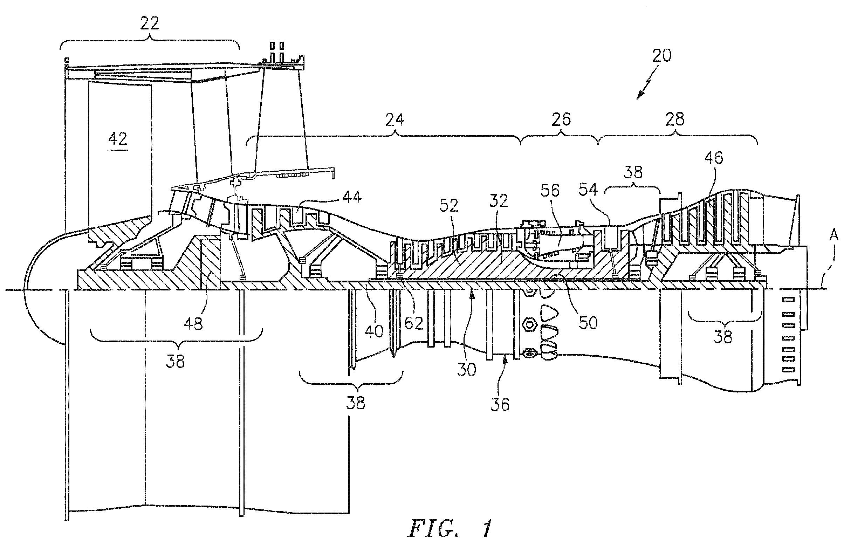

FIG. 1 schematically illustrates a gas turbine engine 20. The gas turbine engine 20 is disclosed herein as a two-spool turbo fan that generally incorporates a fan section 22, a compressor section 24, a combustor section 26 and a turbine section 28. Alternative engines (not shown) might include an augmentor section among other systems or features. Although depicted as a high-bypass turbofan in the disclosed non-limiting embodiment, it should be appreciated that the concepts described herein are not limited to use only with turbofan architectures as the teachings may be applied to other types of turbine engines such as turbojets, turboshafts, industrial gas turbines, and three-spool (plus fan) turbofans with an intermediate spool.

The engine 20 generally includes a low spool 30 and a high spool 32 mounted for rotation about an engine central longitudinal axis A relative to an engine case structure 36 via several bearing structures 38. The low spool 30 generally includes an inner shaft 40 that interconnects a fan 42, a low pressure compressor ("LPC") 44 and a low pressure turbine ("LPT") 46. The inner shaft 40 may drive the fan 42 directly or through a geared architecture 48 to drive the fan 42 at a lower speed than the low spool 30. An exemplary reduction transmission is an epicyclic transmission, namely a planetary or star gear system.

The high spool 32 includes an outer shaft 50 that interconnects a high pressure compressor ("HPC") 52 and a high pressure turbine ("HPT") 54. A combustor 56 is arranged between the high pressure compressor 52 and the high pressure turbine 54. The inner shaft 40 and the outer shaft 50 are concentric and rotate about the engine central longitudinal axis A which is collinear with their longitudinal axes.

Core airflow is compressed by the LPC 44 then the HPC 52, mixed with the fuel and burned in the combustor 56, then expanded over the HPT 54 and the LPT 46. The LPT 46 and the HPT 54 rotationally drive the respective low spool 30 and high spool 32 in response to the expansion.

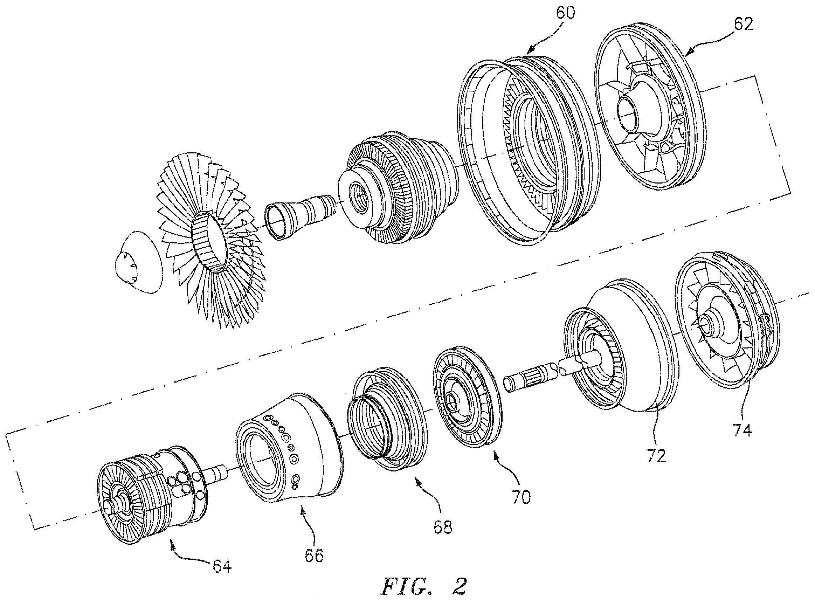

With reference to FIG. 2, the engine case structure 36 (see FIG. 1) generally includes an assembly of a plurality of cases or modules to include a fan case 60, an intermediate case 62, a HPC case 64, a diffuser case 66, a High Pressure Turbine (HPT) case 68, a mid turbine frame (MTF) case 70, a Low Pressure Turbine (LPT) case 72, and a Turbine Exhaust case (TEC) 74. It should be appreciated that various additional or alternative cases will also benefit herefrom and the cases 60-74 may be assembled or disassembled for maintenance at any interface.

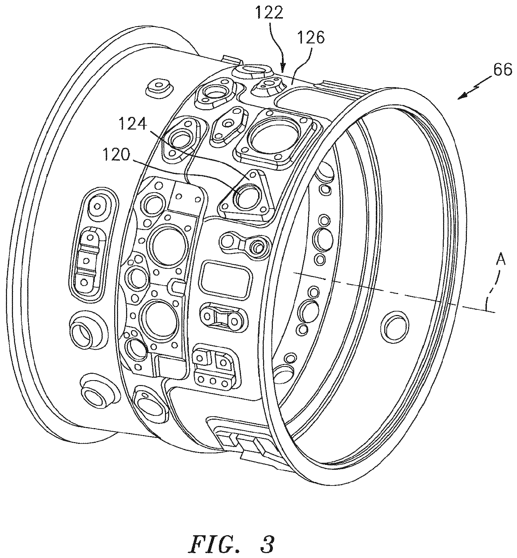

With reference to FIG. 3, the diffuser case 66 generally includes a plurality of through-holes 120 that penetrate through a wall 122 typical of holes configured to receive instrumentation such as a borescope, threaded holes for bolts to mount various components such as the fuel injectors and other types of apertures. It should be further appreciated that although a diffuser case is illustrated in one disclosed non-limiting embodiment, various cases will also benefit herefrom.

The through-holes 120 may be defined through a boss 124 or other feature that radially extends from an outer surface 126 of the wall 122 to define a local thickness greater than a thickness of the wall 122. That is, the boss 124 forms a localized case thickness greater than the wall 122. It should be appreciated that various cast and fully-machined engine case structures and boss geometries such as, for example, triangular, rhomboid, rectilinear, circular, oval, diamond, irregular, and other raised portions will benefit herefrom.

The diffuser case 66 is pressurized, which produces hoop stresses in the wall 122. The bosses 124 may generate stress concentrations in the wall material that may otherwise reduce the strength and life of the component due, at least in part to the abrupt transition from a thin case wall/shell to a relatively thick case boss, especially in relatively high pressure vessel diffuser cases.

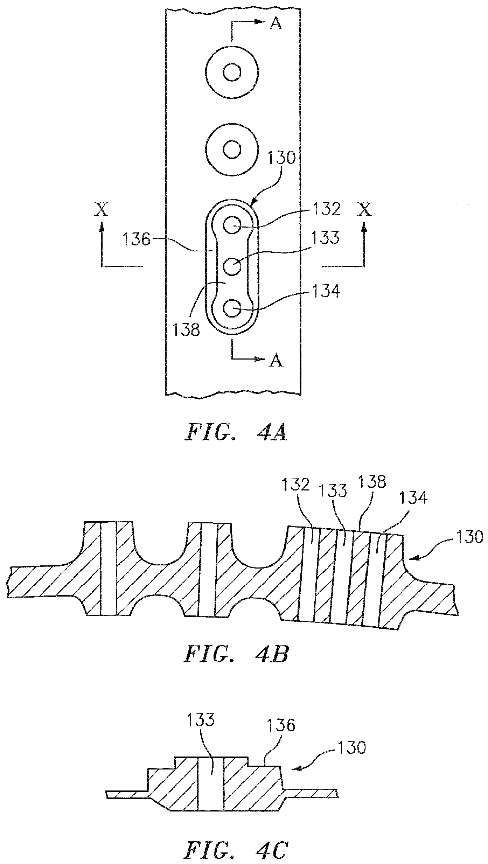

With reference to FIGs. 4A and 4B, to reduce these stresses, distal radial edges and/or surfaces of the bosses may be contoured by including, for example, a groove or shelf on the edge or chamfer, or a local depression(s) on a distal radial surface of the boss. Stiffness of the bosses can be reduced by contouring, along with reducing the thermal gradients, and increasing the convection area on the cold side. Referring to FIG. 4A, a boss 130 having a plurality of holes 132-134 is formed by sidewalls having a contoured/scalloped exterior surfaces 136. The contoured/scalloped exterior surfaces 136 may or may not be of uniform thickness/height, and generally have a partial thickness in comparison to thickness of the boss immediately adjacent to a through hole. For example, at location 138 immediately adjacent to through hole 133 the radial wall thickness is greater than the radial wall thickness of the contoured/scalloped exterior surfaces 136. FIG. 4B is a cross section taken along line A-A illustrated in FIG. 4A illustrating the contoured/scalloped exterior edges 136, which may not be of uniform thickness/height. FIG. 4C is a cross-sectional view taken along line X-X in FIG. 4A.

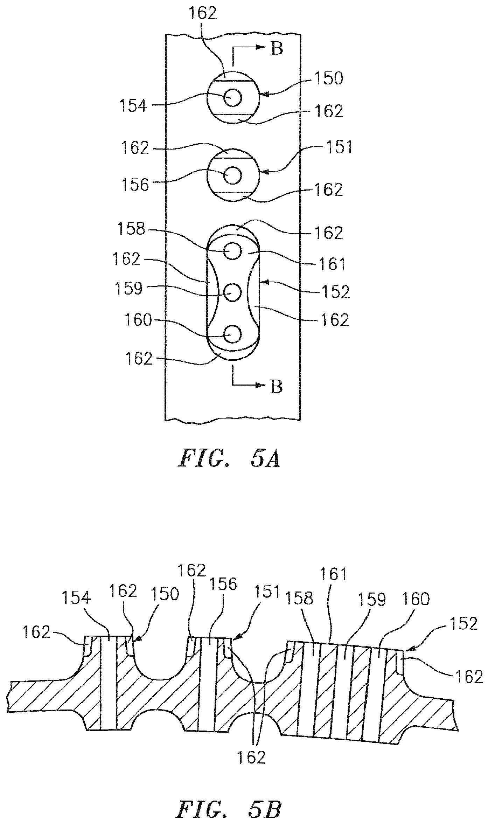

FIGs. 5A and 5B illustrate an expanded view of another example of bosses 150-152 according to one disclosed non-limiting embodiment and a cross-sectional view thereof, respectively. The boss 150 includes through hole 154, the boss 151 includes through hole 156 and the boss 152 includes through holes 158-160. Exterior portions 162 of the boss sidewalls are contoured/scalloped. FIG. 5B is a cross section taken along line B-B illustrated in FIG. 5A illustrating the contoured/scalloped exterior portions of the boss sidewalls, which may not be of uniform thickness/height. The contoured/scalloped exterior portions 162 may not be of uniform radial thickness/height, and generally include a partial thickness in comparison to the thickness of the boss immediately adjacent to a through hole. For example, at surface 161 immediately between the through holes 158 and 159 the radial boss thickness is greater than at the contoured/scalloped exterior portions 162.

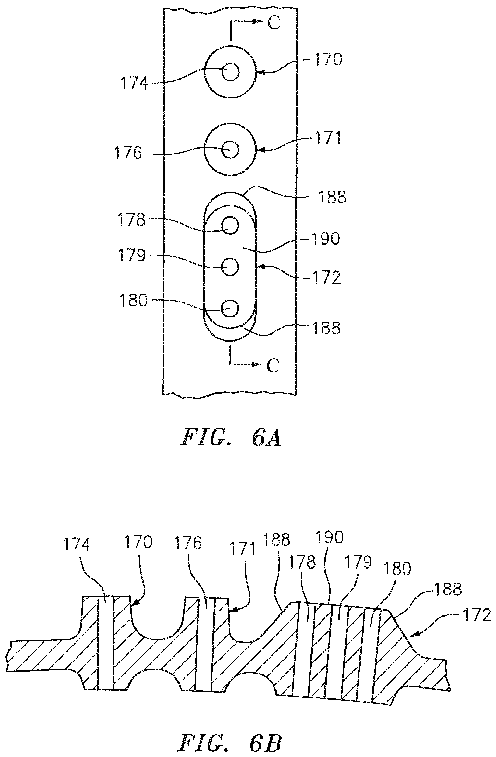

FIGs. 6A and 6B illustrate an expanded view of another example of bosses 170-172 according to one disclosed non-limiting embodiment and a cross-sectional view thereof, respectively. The boss 170 includes through hole 174, the boss 171 includes through hole 176 and the boss 172 includes through holes 178-180. Exterior portions 188 of the boss 172 sidewalls are non-uniformly contoured/scalloped axially exterior to the through holes 178-180. FIG. 6B is a cross section taken along line C-C illustrated in FIG. 6A illustrating the non-uniformly contoured/scalloped exterior portions 188 of the boss sidewalls, which may not be of uniform thickness/height. The non-uniformly contoured/scalloped exterior portions may not be of uniform thickness/height, and generally include a partial thickness in comparison to thickness of the boss immediately adjacent to a through hole. For example, at surface 190 immediately between the through holes 178 and 179 the radial boss thickness is greater than at the contoured/scalloped exterior portions 188.

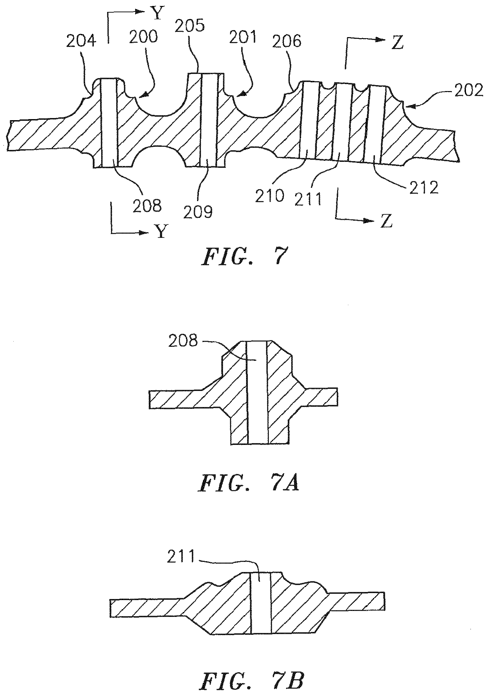

FIG. 7 is a cross-sectional view of boss 200-202 according to another disclosed non-limiting embodiment. In this embodiment, top surfaces 204-206 of the boss surrounding through holes 208-212 are not planar, or even necessarily symmetrical, immediately adjacent the through holes 208-212. FIG. 7A is a cross-sectional illustration taken along the line Y-Y in FIG. 7. FIG. 7B is a cross-sectional illustration taken along the line Z-Z in FIG. 7.

It should be understood that relative positional terms such as "forward," "aft," "upper," "lower," "above," "below," and the like are with reference to the normal operational attitude of the vehicle and should not be considered otherwise limiting.

Although the different non-limiting embodiments have specific illustrated components, the embodiments of this invention are not limited to those particular combinations. It is possible to use some of the components or features from any of the non-limiting embodiments in combination with features or components from any of the other non-limiting embodiments.

It should be understood that like reference numerals identify corresponding or similar elements throughout the several drawings. It should also be understood that although a particular component arrangement is disclosed in the illustrated embodiment, other arrangements will benefit herefrom.

The foregoing description is exemplary rather than defined by the features within. Various non-limiting embodiments are disclosed herein, however, one of ordinary skill in the art would recognize that various modifications and variations in light of the above teachings will fall within the scope of the appended claims. It is therefore to be understood that within the scope of the appended claims, the disclosure may be practiced other than as specifically described. For that reason the appended claims should be studied to determine true scope and content.

## Claims

1. A case (66) for a gas turbine engine (20), the case (66) comprising:
a case wall (122); and
a boss (130; 150-152; 170-172; 200-202) that extends from the case wall (122), the boss (130; 150-152; 170-172; 200-202) comprising a distal top contoured surface (136; 162; 188; 204-206) with a through hole (132-134; 154-160; 174-180; 208-212) formed there in, the distal top contoured surface (136; 162; 188; 204-206) having a non-uniform radial wall thickness.

2. The case (66) as recited in claim 1, wherein the boss (130; 150-152; 170-172; 200-202) includes a plurality of through holes (132-134; 154-160; 174-180; 208-212), wherein each of the plurality of through holes (132-134; 154-160; 174-180; 208-212) has an associated distal top surface (136; 162; 188; 204-206) having an associated non-uniform radial wall thickness.

3. The case (66) as recited in claim 1 or 2, wherein the case wall (122) defines a first thickness and the boss (130; 150-152; 170-172; 200-202) defines a second thickness at the distal top contoured surface (136; 162; 188; 204-206), and the second thickness is greater than the first thickness.

4. The case (66) as recited in claim 1, 2 or 3, wherein the case (66) is a diffuser case.

5. The case (66) as recited in any preceding claim, wherein the boss (130; 150-152; 170-172; 200-202) is triangular shaped.

6. The case (66) as recited in any of claims 1 to 4, wherein the boss (130; 150-152; 170-172; 200-202) is rhomboid shaped.

7. A case (66) for a gas turbine engine (20), the case (66) comprising:
a case wall (122) that defines a first thickness; and
a boss (130; 150-152; 170-172; 200-202) that extends from the case wall (122), the boss (130; 150-152; 170-172; 200-202) comprising a distal top surface (136; 162; 188; 204-206) with a through hole (132-134; 154-160; 174-180; 208-212) formed there in, the distal top surface (136; 162; 188; 204-206) having a radial wall surface whose radial thickness is non-uniform.

8. A method of reducing stress in a case (66) of a gas turbine engine (20), the method comprising:
machining a radial wall of a boss (130; 150-152; 170-172; 200-202) so the boss (130; 150-152; 170-172; 200-202) has a non-uniform radial thickness.

9. The method as recited in claim 8, further comprising 3-axis milling the boss (130; 150-152; 170-172; 200-202).

10. The method as recited in claim 8, further comprising multi-axis milling the boss (130; 150-152; 170-172; 200-202).

11. The method as recited in claim 8, 9 or 10, further comprising marching the boss (130; 150-152; 170-172; 200-202) to a desired case wall thickness.
